# EUROPEAN PATENT SPECIFICATION

(11) **EP 4 480 717 B1**
(45) Date of publication and mention of the grant of the patent: **03.12.2025**
(21) Application number: 24176307.7
(22) Date of filing: 16.05.2024
(51) Int. Cl.: B60C 11/00, B60C 11/03

(54) **TIRE**
REIFEN
PNEUMATIQUE

(30) Priority: 19.06.2023 JP 2023100199
(43) Date of publication of application: 25.12.2024
(73) Proprietor: Sumitomo Rubber Industries, Ltd., Kobe-shi, Hyogo 651-0072 (JP)
(72) Inventor: KOIKE, Hiroki, Kobe-shi, 651-0072 (JP)
(74) Representative: Manitz Finsterwald Patent- und Rechtsanwaltspartnerschaft mbB

(56) References cited:
- EP-A1- 1 140 527
- EP-A1- 1 619 048
- EP-A1- 2 113 399
- EP-A1- 4 190 587
- JP-A- H11 321 237
- US-A1- 2011 048 600
- US-A1- 2014 373 990
- US-A1- 2016 152 084

## Description

### BACKGROUND OF THE INVENTION

### Field of the Invention

The present invention relates to a tire.

### Background Art

Japanese Laid-Open Patent Publication No. 2020-100220 discloses a tire including a tread portion having a designated mounting direction to a vehicle. The tread portion includes an outer shoulder land portion and an inner shoulder land portion. The outer shoulder land portion has outer shoulder lateral grooves which each include an outer first portion extending on an outer tread end side and an outer second portion having a smaller groove width and a smaller groove depth than the outer first portion. In addition, the inner shoulder land portion has inner shoulder lateral grooves which each include a tie bar raised at a groove bottom thereof. Such a tire is considered to be able to improve steering stability while maintaining ice and snow road performance. Other similar tires are disclosed in US 2014/373990 A1,
US 2011/048600 A1, JP H11 321237 A, EP 1619048 A1, EP 1140527 A1, US 2016/152084 A1, EP 2113399 A1 and EP 4 190 587 A1.

However, a problem arises that uneven wear in which wear concentrates on the inner shoulder land portion as compared to the outer shoulder land portion of the tread portion is caused in the tire described above.

The present invention has been made in view of the above circumstances, and a main object of the present invention is to provide a tire capable of improving on-snow performance while maintaining uneven wear resistance and steering stability.

### SUMMARY OF THE INVENTION

The present invention is directed to a tire including a tread portion, wherein the tread portion has a designated mounting direction to a vehicle, the tread portion includes: an outer tread end located at an outer side of the vehicle when the tire is mounted on the vehicle; an inner tread end located at an inner side of the vehicle when the tire is mounted on the vehicle; a first circumferential groove extending in a tire circumferential direction; an outer region which is a region between the outer tread end and the first circumferential groove; and an inner region which is a region between the inner tread end and the first circumferential groove, a rubber hardness of a ground-contact surface of the outer region is smaller than a rubber hardness of a ground-contact surface of the inner region, the outer region has a plurality of outer lateral grooves extending inward in a tire axial direction from the outer tread end, the inner region has a plurality of inner lateral grooves extending inward in the tire axial direction from the inner tread end, a one-pitch length in the tire circumferential direction of the plurality of outer lateral grooves is larger than a one-pitch length in the tire circumferential direction of the plurality of inner lateral grooves, and a groove depth at the outer tread end of each of the plurality of outer lateral grooves is smaller than a groove depth at the inner tread end of each of the plurality of inner lateral grooves.

As a result of employing the above configuration, the tire according to the present invention can improve on-snow performance while maintaining uneven wear resistance and steering stability.

### BRIEF DESCRIPTION OF THE DRAWINGS

FIG. 1 is a plan view of a tread portion showing one embodiment of a tire according to the present invention;
FIG. 2 is a cross-sectional view of the tire in FIG. 1 taken along a line A-A; and
FIG. 3 is an enlarged plan view of the tread portion.

### DETAILED DESCRIPTION

Hereinafter, one embodiment of the present invention will be described with reference to the drawings. The drawings contain exaggerated expressions and expressions that differ from the dimensional ratio of the actual structure in order to help the understanding of the present invention. In addition, when there are a plurality of embodiments, the same or common elements are denoted by the same reference characters throughout the description, and the redundant description thereof is omitted.

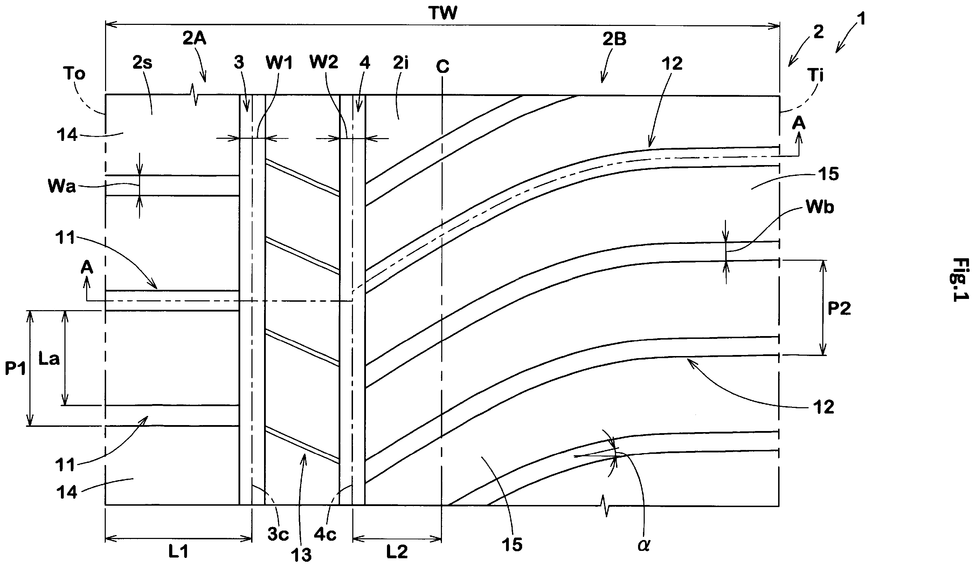

FIG. 1 is a plan view of a tread portion 2 of a tire 1 showing one embodiment of the present invention. The present invention is used for an all-season pneumatic tire for a passenger car, and the car can run even on a snow road with such tires. However, the present invention may, for example, be used for a heavy-duty pneumatic tire, or a non-pneumatic tire the interior of which is not filled with pressurized air.

The tread portion 2 has a designated mounting direction to a vehicle. Accordingly, as shown in FIG. 1, the tire 1 has an outer tread end To located at an outer side of the vehicle and an inner tread end Ti located at an inner side of the vehicle, when the tire is mounted on the vehicle.

In the case of a pneumatic tire, the outer tread end To and the inner tread end Ti each correspond to the outermost ground contact position in a tire axial direction when 70% of a standardized load is applied to the tire 1 in a standardized state and the tire 1 is in contact with a plane at a camber angle of 0°. In the case of the pneumatic tire 1 for which various standards are defined, the "standardized state" is a state in which the tire 1 is fitted on a standardized rim (not shown) and inflated to a standardized internal pressure and no load is applied to the tire 1. In the case of a non-pneumatic tire or a tire for which various standards are not defined, the standardized state means a standard use state, corresponding to the purpose of use of the tire, where no load is applied to the tire. In the present description, unless otherwise specified, dimensions and the like of components of the tire 1 are values measured in the standardized state. In addition, the distance in the tire axial direction between the outer tread end To and the inner tread end Ti is a tread width TW.

The "standardized rim" is a rim that is defined, in a standard system including a standard on which the tire 1 is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire 1 is based, by the standard for each tire, and is the "highest air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The "standardized load" is a load that is defined, in a standard system including a standard on which the tire 1 is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. In the case of a non-pneumatic tire or a tire for which various standards are not defined, the "standardized load" refers to a load that acts on one tire in a standard mounting state of the tire. The "standard mounting state" refers to a state in which a tire is mounted on a standard vehicle corresponding to the purpose of use of the tire and the vehicle is stationary on a flat road surface in a state in which the vehicle can run.

The tread portion 2 of the present embodiment includes a first circumferential groove 3 extending in a tire circumferential direction, an outer region 2A which is a region between the outer tread end To and the first circumferential groove 3, and an inner region 2B which is a region between the inner tread end Ti and the first circumferential groove 3.

The outer region 2A has a plurality of outer lateral grooves 11 extending inward in the tire axial direction from the outer tread end To. The inner region 2B has a plurality of inner lateral grooves 12 extending inward in the tire axial direction from the inner tread end Ti. In the present description, grooves such as the "lateral groove" and a circumferential groove described below each refer to a recess with a width not smaller than 1.5 mm obtained at the ground-contact surface, and are clearly distinguished from a sipe (not shown) with a width smaller than 1.5 mm in the form of a cutout.

The plurality of outer lateral grooves 11 are formed such that a pitch length P1 thereof in the tire circumferential direction is larger than a pitch length P2 in the tire circumferential direction of the plurality of inner lateral grooves 12. Accordingly, in the inner region 2B, the number of the inner lateral grooves 12 is relatively large, and thus a high snow column shear force and an edge effect are exhibited and on-snow performance is improved. Meanwhile, in the outer region 2A, a length La in the tire circumferential direction of each of blocks B defined by the outer lateral grooves 11 is large, and thus steering stability is maintained. For example, for the tire 1, a so-called variable pitch method in which a plurality of pitch elements having pitch lengths different from each other in the tire circumferential direction are randomly arranged in the tire circumferential direction is used in some cases. In this case, the pitch length P1 and the pitch length P2 are each a value (average pitch length) obtained by dividing a tire circumferential length at the outer tread end To or at the inner tread end Ti by the total number of the outer lateral grooves 11 or the total number of the inner lateral grooves 12.

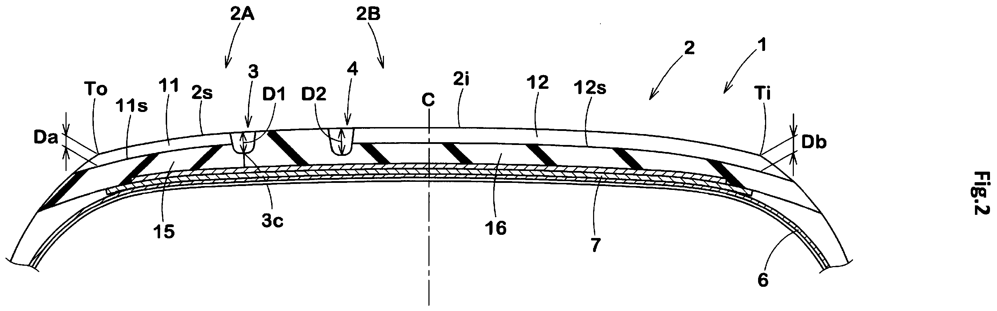

FIG. 2 is a cross-sectional view taken along a line A-A in FIG. 1. As shown in FIG. 2, the plurality of outer lateral grooves 11 are each formed such that a groove depth Da thereof at the outer tread end To is smaller than a groove depth Db at the inner tread end Ti of each of the plurality of inner lateral grooves 12. Thus, a large snow column shear force is exhibited at the inner tread end Ti, and on-snow performance is further improved. Meanwhile, the groove depth Da of the outer lateral groove 11 is relatively small at the outer tread end To, and thus steering stability is maintained. The groove depth Da is the shortest distance between a groove bottom 11s (the deepest portion) of the outer lateral groove 11 and the outer tread end To. The groove depth Db is the shortest distance between a groove bottom 12s (the deepest portion) of the inner lateral groove 12 and the inner tread end Ti.

A ground-contact surface 2s of the outer region 2A is formed so as to have a rubber hardness Ra that is smaller than a rubber hardness Rb of a ground-contact surface 2i of the inner region 2B. Thus, the difference in stiffness between the outer region 2A and the inner region 2B is reduced, so that uneven wear such as early wear of the inner region 2B is inhibited. Therefore, the tire 1 of the present invention can improve on-snow performance while maintaining uneven wear resistance and steering stability. In the present description, the rubber hardness refers to a durometer A hardness which is measured at a standard temperature of 23°C±2°C by a type A durometer, in accordance with JIS-K6253.

The tire 1 includes tire components such as a carcass 6 extending between a pair of bead portions, which are not shown, and a belt layer 7 disposed adjacent to the outer side in the tire radial direction of the carcass 6 in the tread portion 2. A known mode is adopted as appropriate for these tire components.

The tread portion 2 includes an outer tread rubber 15 forming the ground-contact surface 2s and an inner tread rubber 16 forming the ground-contact surface 2i. The outer tread rubber 15 and the inner tread rubber 16 are obtained by segmenting with a groove width center line 3c of the first circumferential groove 3. The outer tread rubber 15 is formed between the ground-contact surface 2s and the belt layer 7. The inner tread rubber 16 is formed between the ground-contact surface 2i and the belt layer 7. A range in which the outer tread rubber 15 and the inner tread rubber 16 are disposed is not limited to the illustrated range.

The rubber hardness Ra of the ground-contact surface 2s of the outer region 2A (rubber hardness of the outer tread rubber 15) is preferably not less than 0.70 times and more preferably not less than 0.75 times the rubber hardness Rb of the ground-contact surface 2i of the inner region 2B (rubber hardness of the inner tread rubber 16), and is preferably not more than 0.95 times and more preferably not more than 0.85 times the rubber hardness Rb of the ground-contact surface 2i of the inner region 2B (rubber hardness of the inner tread rubber 16). Since the rubber hardness Ra of the ground-contact surface 2s of the outer region 2A is not less than 0.70 times and not more than 0.95 times the rubber hardness Rb of the ground-contact surface 2i of the inner region 2B, the difference in stiffness between the outer region 2A and the inner region 2B is further reduced, and uneven wear resistance can be maintained even higher.

The rubber hardness Ra of the ground-contact surface 2s of the outer region 2A is not particularly limited, but is preferably not smaller than 50 degrees and more preferably not smaller than 55 degrees, and is preferably not larger than 65 degrees and more preferably not larger than 60 degrees.

An area A2 of the inner region 2B is preferably larger than an area A1 of the outer region 2A. Thus, when the tire 1 is mounted at a negative camber, the ground-contact area of the inner region 2B having a relatively large number of the lateral grooves is larger, and thus on-snow performance can be further improved. The area A1 and the area A2 are each a virtual area obtained by filling the grooves (recesses each having a width not smaller than 1.5 mm at the ground-contact surface) excluding the first circumferential groove 3. From the viewpoint of achieving both on-snow performance and steering stability, the area A1 of the outer region 2A is preferably not less than 0.25 times and more preferably not less than 0.30 times the sum (A1+A2) of the area A1 of the outer region 2A and the area A2 of the inner region 2B, and is preferably not more than 0.50 times and more preferably not more than 0.45 times the sum (A1+A2) of the area A1 of the outer region 2A and the area A2 of the inner region 2B. The negative camber refers to a state in which a tire equator C is inclined toward the inner side from outer side in the axial direction of the vehicle upward from below when the tire 1 is mounted on the vehicle, and ground-contact pressure at the inner tread end Ti side is higher than that at the outer tread end To side. A camber angle at a negative camber is preferably not larger than 2°.

As shown in FIG. 1 and FIG. 2, the tread portion 2 has a second circumferential groove 4 located at the inner tread end Ti side with respect to the first circumferential groove 3. The first circumferential groove 3 and the second circumferential groove 4, for example, linearly extend parallel to the tire circumferential direction. Such a first circumferential groove 3 and such a second circumferential groove 4 can reduce change in stiffness in the tire circumferential direction between the outer region 2A and the inner region 2B, and occurrence of uneven wear can be effectively suppressed. The first circumferential groove 3 and the second circumferential groove 4 may extend in a zigzag or wavy manner with respect to the tire circumferential direction, for example.

The outer lateral grooves 11 are connected to the first circumferential groove 3 of the present embodiment. The inner lateral grooves 12 are connected to the second circumferential groove 4 of the present embodiment. The outer region 2A of the present embodiment has a plurality of outer blocks 14 each defined by the outer lateral grooves 11 adjacent to the outer block 14 in the tire axial direction, the outer tread end To, and the first circumferential groove 3. The inner region 2B of the present embodiment has a plurality of inner blocks 15 each defined by the inner lateral grooves 12 adjacent to the inner block 15 in the tire circumferential direction, the inner tread end Ti, and the second circumferential groove 4.

The second circumferential groove 4 is, for example, located at the outer tread end To side with respect to the tire equator C. In other words, the first circumferential groove 3 and the second circumferential groove 4 are located at the outer tread end To side with respect to the tire equator C in the present embodiment. The second circumferential groove 4 of the present embodiment is disposed in the inner region 2B.

A separation distance L1 (hereinafter, referred to as first separation distance in some cases) in the tire axial direction between the groove width center line 3c of the first circumferential groove 3 and the outer tread end To is preferably not less than 15% and more preferably not less than 20% of the tread width TW, and is preferably not more than 35% and more preferably not more than 30% of the tread width TW. Since the first separation distance L1 is not less than 15% of the tread width TW, reduction in stiffness in the tire axial direction can be inhibited in the vicinity of the outer tread end To on which a larger lateral force acts during cornering. Since the first separation distance L1 is not more than 35% of the tread width TW, the area A2 of the inner region 2B can be ensured to be large.

A separation distance L2 (hereinafter, referred to as second separation distance in some cases) in the tire axial direction between a groove width center line 4c of the second circumferential groove 4 and the tire equator C is formed so as to be smaller than the first separation distance L1. Accordingly, the length in the tire axial direction of each outer block 14, and the volume thereof are relatively large. Thus, the outer blocks 14 can serve sufficiently as support with respect to a large lateral force generated during cornering, so that steering stability is improved. The second separation distance L2 is not particularly limited, but is preferably not less than 2% and more preferably not less than 4% of the tread width TW, and is preferably not more than 12% and more preferably not more than 9% of the tread width TW.

The second circumferential groove 4 is formed such that a groove depth D2 thereof is larger than a groove depth D1 of the first circumferential groove 3. When the tire 1 is mounted at a negative camber, such a second circumferential groove 4 enables smooth draining of a layer of water between a road surface and the ground-contact surface 2i of the inner region 2B on which a relatively large ground-contact pressure acts, and thus wet performance can be increased. In addition, when the tire 1 is mounted at a negative camber, a relatively large ground-contact pressure occurs on the inner region 2B during straight running, thereby accelerating wear. However, since the groove depth D2 of the second circumferential groove 4 is larger than the groove depth D1 of the first circumferential groove 3, the lives of the first circumferential groove 3 and the second circumferential groove 4 can be equalized and uneven wear can also be prevented.

In order to effectively exhibit such an effect, the groove depth D1 of the first circumferential groove 3 is preferably not less than 0.5 times and more preferably not less than 0.6 times the groove depth D2 of the second circumferential groove 4, and is more preferably not more than 0.9 times the groove depth D2 of the second circumferential groove 4. In addition, the groove depth D1 of the first circumferential groove 3 is preferably not less than 0.4 times and more preferably not less than 0.5 times the groove depth Da at the outer tread end To of each outer lateral groove 11, and is preferably not more than 0.9 times and more preferably not more than 0.8 times the groove depth Da at the outer tread of each outer lateral groove 11. The groove depth D1 of the first circumferential groove 3 is preferably 4 to 8 mm.

The groove width W1 of the first circumferential groove 3 is, for example, substantially equal to the groove width W2 of the second circumferential groove 4. The groove width W1 of the first circumferential groove 3 is preferably not less than 10% and more preferably not less than 15% of the first separation distance L1, and is preferably not more than 30% and more preferably not more than 25% of the first separation distance L1. In the present description, the "substantially equal" means that the groove width W1 of the first circumferential groove 3 is 80% to 125% of the groove width W2 of the second circumferential groove 4.

The outer lateral grooves 11, for example, linearly extend. In the present embodiment, the outer lateral grooves 11 extend parallel to the tire axial direction. The outer lateral grooves 11 may, for example, be inclined with respect to the tire axial direction. In the present embodiment, each of the plurality of outer lateral grooves 11 is connected to the first circumferential groove 3. Such outer lateral grooves 11 enable large snow columns to be formed in the outer region 2A. The outer lateral grooves 11 each extend from the outer tread end To to the first circumferential groove 3 with a uniform groove width Wa. The outer lateral grooves 11 are not limited to such a mode.

The inner lateral grooves 12, for example, each extend so as to form an arc shape that is convex to one side (upward in FIG. 1) in the tire circumferential direction. In the present embodiment, the inner lateral grooves 12 each extend such that an angle α relative to the tire axial direction is increased continuously toward the second circumferential groove 4 from the inner tread end Ti side. In the present embodiment, each of the plurality of inner lateral grooves 12 is connected to the second circumferential groove 4. Such inner lateral grooves 12 enable large snow columns to be formed in the inner region 2B. The inner lateral grooves 12 each extend from the inner tread end Ti to the second circumferential groove 4 with a uniform groove width Wb. The inner lateral grooves 12 are not limited to such a mode.

The groove width Wa of each outer lateral groove 11 is, for example, substantially equal to the groove width Wb of the inner lateral groove 12. Thus, the difference in stiffness between the outer region 2A and the inner region 2B can be effectively reduced. In the present description, the "substantially equal" means that the groove width Wa of the outer lateral groove 11 is 80% to 125% of the groove width Wb of the inner lateral groove 12. The groove width Wa of the outer lateral groove 11 is, for example, preferably not less than 50% and more preferably not less than 60% of the groove width W1 of the first circumferential groove 3, and is preferably not more than 80% and more preferably not more than 70% of the groove width W1 of the first circumferential groove 3.

The groove depth Da at the outer tread end To of each of the plurality of outer lateral grooves 11 is preferably not less than 0.80 times and more preferably not less than 0.85 times the groove depth Db at the inner tread end Ti of each of the plurality of inner lateral grooves 12, and is preferably not more than 0.95 times and preferably not more than 0.90 times the groove depth Db at the inner tread end Ti of each of the plurality of inner lateral grooves 12. Since the groove depth Da of the outer lateral groove 11 is not less than 0.8 times and not more than 0.95 times the groove depth Db of the inner lateral groove 12, both on-snow performance and steering stability are further achieved. The groove depth Da at the outer tread end To of each of the plurality of outer lateral grooves 11 is not particularly limited, but is, for example, preferably not smaller than 2 mm and more preferably not smaller than 3 mm, and is preferably not larger than 7 mm and more preferably not larger than 6 mm.

In addition, the pitch length P1 in the tire circumferential direction of the plurality of outer lateral grooves 11 is preferably not less than 1.10 times and more preferably not less than 1.15 times the pitch length P2 in the tire circumferential direction of the plurality of inner lateral grooves 12, and is preferably not more than 2.00 times and more preferably not more than 1.40 times the pitch length P2 in the tire circumferential direction of the plurality of inner lateral grooves 12. Since the pitch length P1 is not more than 2.00 times the pitch length P2, the number of the outer lateral grooves 11 is ensured, reduction in a snow column shear force or an edge effect can be inhibited in the outer region 2A, and the effect of improving on-snow performance is highly maintained. In addition, an excessive reduction in the stiffness of the inner region 2B is inhibited. Since the pitch length P1 is not less than 1.10 times the pitch length P2, a larger snow column shear force and a higher edge effect in the inner region 2B can be exhibited. The pitch length P1 is not particularly limited, but is preferably not less than 10% and more preferably not less than 14% of the tread width TW, and is preferably not more than 26% and more preferably not more than 22% of the tread width TW.

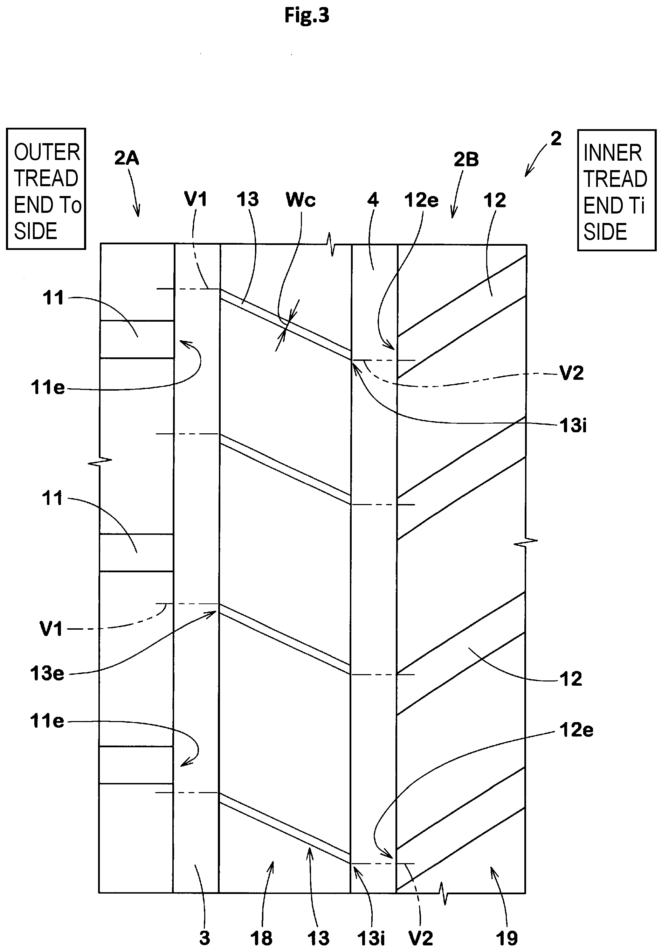

FIG. 3 is a plan view of a portion, of the tread portion 2, around the first circumferential groove 3 and the second circumferential groove 4. As shown in FIG. 3, the inner region 2B is divided into a middle land portion 18 between the second circumferential groove 4 and the first circumferential groove 3 and an inner shoulder land portion 19 between the second circumferential groove 4 and the inner tread end Ti.

The middle land portion 18, for example, has a plurality of middle lateral grooves 13 connecting the first circumferential groove 3 and the second circumferential groove 4. In the present embodiment, the middle lateral grooves 13 linearly extend so as to be inclined with respect to the tire axial direction. A pitch length of the middle lateral grooves 13 is, for example, equal to the pitch length P2 of the inner lateral grooves 12 (shown in FIG. 1).

In the present embodiment, each of the middle lateral grooves 13 does not communicate with any of the outer lateral grooves 11 via the first circumferential groove 3. Thus, the stiffness of a portion around the first circumferential groove 3 is inhibited from locally decreasing, change in stiffness across the boundary between the outer region 2A and the inner region 2B having rubber hardnesses different from each other can be reduced, and thus occurrence of uneven wear can be suppressed. The "does not communicate via the first circumferential groove 3" means that a virtual straight line V1 which is parallel to the tire axial direction and is located at an open end 13e, of the middle lateral groove 13, open at the first circumferential groove 3 is shifted in the tire circumferential direction with respect to an open end 11e, of the outer lateral groove 11, open at the first circumferential groove 3.

In the present embodiment, each of the middle lateral grooves 13 communicates with any of the inner lateral grooves 12 via the second circumferential groove 4. Thus, the stiffness of a portion near an open end 12e, of each inner lateral groove 12, open at the second circumferential groove 4 decreases, deformation of the tread portion 2 is increased at such a portion, and thus snow that is packed in the inner lateral groove 12 having a relatively large length in the tire axial direction can be smoothly removed around an opening end 12e. Therefore, on-snow performance can be improved. The "communicate via the second circumferential groove 4" means that a virtual straight line V2 which is parallel to the tire axial direction and is located at an opening end 13i, of the middle lateral groove 13, open at the second circumferential groove 4 overlaps, in the tire circumferential direction, the opening end 12e, of the inner lateral groove 12, open at the second circumferential groove 4.

A groove width Wc of each middle lateral groove 13 is not particularly limited, but is preferably not less than 30% and more preferably not less than 40% of the groove width Wb of the inner lateral groove 12 (shown in FIG. 2), and is preferably not more than 70% and more preferably not more than 60% of the groove width Wb of the inner lateral groove 12 (shown in FIG. 2).

The invention is defined by the appended claims. Although one embodiment of the present invention has been described in detail above, the present invention is not limited to the above specific embodiment, and various modifications falling within the scope of the claims can be made to implement the present invention. For example, the outer region 2A and the inner region 2B may have a plurality of sipes (not shown) extending parallel to the outer lateral groove 11, the inner lateral groove 12, and/or the middle lateral groove 13.

## Claims

1. A tire (1) including a tread portion (2), wherein
the tread portion (2) has a designated mounting direction to a vehicle,
the tread portion (2) includes:
an outer tread end (To) located at an outer side of the vehicle when the tire (1) is mounted on the vehicle;
an inner tread end (Ti) located at an inner side of the vehicle when the tire (1) is mounted on the vehicle;
a first circumferential groove (3) extending in a tire circumferential direction;
an outer region (2A) which is a region between the outer tread end (To) and the first circumferential groove (3); and
an inner region (2B) which is a region between the inner tread end (Ti) and the first circumferential groove (3),
a rubber hardness (Ra) of a ground-contact surface (2s) of the outer region (2A) is smaller than a rubber hardness (Rb) of a ground-contact surface (2i) of the inner region (2B), and
**characterized in that**
the outer region (2A) has a plurality of outer lateral grooves (11) extending inward in a tire axial direction from the outer tread end (To),
the inner region (2B) has a plurality of inner lateral grooves (12) extending inward in the tire axial direction from the inner tread end (Ti),
a pitch length (P1) in the tire circumferential direction of the plurality of outer lateral grooves (11) is larger than a pitch length (P2) in the tire circumferential direction of the plurality of inner lateral grooves (12), and
a groove depth (Da) at the outer tread end (To) of each of the plurality of outer lateral grooves (11) is smaller than a groove depth (Db) at the inner tread end (Ti) of each of the plurality of inner lateral grooves (12).

2. The tire (1) according to claim 1, wherein the groove depth (Da) at the outer tread end (To) of each of the plurality of outer lateral grooves (11) is not less than 0.8 times the groove depth (Db) at the inner tread end (Ti) of each of the plurality of inner lateral grooves (12).

3. The tire (1) according to claim 1 or 2, wherein the pitch length (P1) in the tire circumferential direction of the plurality of outer lateral grooves (11) is 1.1 to 2.0 times the pitch length (P2) in the tire circumferential direction of the plurality of inner lateral grooves (12).

4. The tire (1) according to any one of claims 1 to 3, wherein the rubber hardness (Ra) of the ground-contact surface (2s) of the outer region (2A) is 0.70 to 0.95 times the rubber hardness (Rb) of the ground-contact surface (2i) of the inner region (2B).

5. The tire (1) according to any one of claims 1 to 4, wherein
the tread portion (2) has a second circumferential groove (4) located at the inner tread end (Ti) side with respect to the first circumferential groove (3), and
a groove depth (D2) of the second circumferential groove (4) is larger than a groove depth (D1) of the first circumferential groove (3).

6. The tire (1) according to claim 5, wherein the groove depth (D1) of the first circumferential groove (3) is larger than 0.5 times the groove depth (D2) of the second circumferential groove (4).

7. The tire (1) according to any one of claims 1 to 6, wherein an area (A1) of the outer region (2A) is 0.25 to 0.5 times the sum of the area (A1) of the outer region (2A) and an area (A2) of the inner region (2B).

8. The tire (1) according to any one of claims 1 to 7, wherein each of the plurality of outer lateral grooves (11) is connected to the first circumferential groove (3).

9. The tire (1) according to claim 5 or 6, wherein each of the plurality of inner lateral grooves (12) is connected to the second circumferential groove (4).

## Patentansprüche

1. Reifen (1) mit einem Laufflächenabschnitt (2), wobei
der Laufflächenabschnitt (2) eine bestimmte Montagerichtung an einem Fahrzeug aufweist,
wobei der Laufflächenabschnitt (2) umfasst:
ein äußeres Laufflächenende (To), das sich an einer Außenseite des Fahrzeugs befindet, wenn der Reifen (1) an dem Fahrzeug aufgezogen ist;
ein inneres Laufflächenende (Ti), das sich an einer Innenseite des Fahrzeugs befindet, wenn der Reifen (1) an dem Fahrzeug aufgezogen ist;
eine erste Umfangsrille (3), die sich in einer Reifenumfangsrichtung erstreckt;
einen äußeren Bereich (2A), der ein Bereich zwischen dem äußeren Laufflächenende (To) und der ersten Umfangsrille (3) ist; und
einen inneren Bereich (2B), der ein Bereich zwischen dem inneren Laufflächenende (Ti) und der ersten Umfangsrille (3) ist,
eine Gummihärte (Ra) einer Bodenkontaktfläche (2s) des äußeren Bereichs (2A) kleiner ist als eine Gummihärte (Rb) einer Bodenkontaktfläche (2i) des inneren Bereichs (2B), und
**dadurch gekennzeichnet, dass**
der äußere Bereich (2A) eine Vielzahl von äußeren Querrillen (11) aufweist, die sich in einer Reifenaxialrichtung von dem äußeren Laufflächenende (To) nach innen erstrecken,
der innere Bereich (2B) eine Vielzahl von inneren Querrillen (12) aufweist, die sich in der Reifenaxialrichtung von dem inneren Laufflächenende (Ti) nach innen erstrecken,
eine Teilungsabstandslänge (P1) in der Reifenumfangsrichtung der Vielzahl von äußeren Querrillen (11) größer ist als eine Teilungsabstandslänge (P2) in der Reifenumfangsrichtung der Vielzahl von inneren Querrillen (12), und
eine Rillentiefe (Da) an dem äußeren Laufflächenende (To) jeder der Vielzahl von äußeren Querrillen (11) kleiner ist als eine Rillentiefe (Db) an dem inneren Laufflächenende (Ti) jeder der Vielzahl von inneren Querrillen (12).

2. Reifen (1) nach Anspruch 1, wobei die Rillentiefe (Da) an dem äußeren Laufflächenende (To) jeder der Vielzahl von äußeren Querrillen (11) nicht weniger als das 0,8-fache der Rillentiefe (Db) an dem inneren Laufflächenende (Ti) jeder der Vielzahl von inneren Querrillen (12) beträgt.

3. Reifen (1) nach Anspruch 1 oder 2, wobei die Teilungsabstandslänge (P1) in der Reifenumfangsrichtung der Vielzahl von äußeren Querrillen (11) das 1,1- bis 2,0-fache der Teilungsabstandslänge (P2) in der Reifenumfangsrichtung der Vielzahl von inneren Querrillen (12) beträgt.

4. Reifen (1) nach einem der Ansprüche 1 bis 3, wobei die Gummihärte (Ra) der Bodenkontaktfläche (2s) des äußeren Bereichs (2A) das 0,70- bis 0,95-fache der Gummihärte (Rb) der Bodenkontaktfläche (2i) des inneren Bereichs (2B) beträgt.

5. Reifen (1) nach einem der Ansprüche 1 bis 4, wobei
der Laufflächenabschnitt (2) eine zweite Umfangsrille (4) aufweist, die sich an der Seite des inneren Laufflächenendes (Ti) in Bezug auf die erste Umfangsrille (3) befindet, und
eine Rillentiefe (D2) der zweiten Umfangsrille (4) größer als eine Rillentiefe (D1) der ersten Umfangsrille (3) ist.

6. Reifen (1) nach Anspruch 5, wobei die Rillentiefe (D1) der ersten Umfangsrille (3) größer als das 0,5-fache der Rillentiefe (D2) der zweiten Umfangsrille (4) ist.

7. Reifen (1) nach einem der Ansprüche 1 bis 6, wobei eine Fläche (A1) des äußeren Bereichs (2A) das 0,25- bis 0,5-fache der Summe der Fläche (A1) des äußeren Bereichs (2A) und einer Fläche (A2) des inneren Bereichs (2B) beträgt.

8. Reifen (1) nach einem der Ansprüche 1 bis 7, wobei jede der Vielzahl von äußeren Querrillen (11) mit der ersten Umfangsrille (3) verbunden ist.

9. Reifen (1) nach Anspruch 5 oder 6, wobei jede der Vielzahl von inneren Querrillen (12) mit der zweiten Umfangsrille (4) verbunden ist.

## Revendications

1. Pneumatique (1) incluant une portion formant bande de roulement (2), dans lequel
la portion formant bande de roulement (2) a une direction de montage par conception sur un véhicule,
la portion formant bande de roulement (2) inclut :
une extrémité de bande de roulement extérieure (To) située au niveau d'un côté extérieur du véhicule quand le pneumatique (1) est monté sur le véhicule ;
une extrémité de bande de roulement intérieure (Ti) située au niveau d'un côté intérieur du véhicule quand le pneumatique (1) est monté sur le véhicule ;
une première rainure circonférentielle (3) s'étendant dans une direction circonférentielle du pneumatique ;
une région extérieure (2A) qui est une région entre l'extrémité de bande de roulement extérieure (To) et la première rainure circonférentielle (3) ; et
une région intérieure (2B) qui est une région entre l'extrémité de bande de roulement intérieure (Ti) et la première rainure circonférentielle (3),
une dureté de caoutchouc (Ra) d'une surface de contact au sol (2s) de la région extérieure (2A) est inférieure à une dureté de caoutchouc (Rb) d'une surface de contact au sol (2i) de la région intérieure (2B), et
**caractérisé en ce que**
la région extérieure (2A) a une pluralité de rainures latérales extérieures (11) s'étendant vers l'intérieur dans une direction axiale du pneumatique depuis l'extrémité de bande de roulement extérieure (To),
la région intérieure (2B) a une pluralité de rainures latérales inférieures (12) s'étendant vers l'intérieur dans la direction axiale du pneumatique depuis l'extrémité de bande de roulement intérieure (Ti),
une longueur de pas (P1) dans la direction circonférentielle du pneumatique de la pluralité de rainures latérales extérieures (11) est supérieure à une longueur de pas (P2) dans la direction circonférentielle du pneumatique de la pluralité de rainures latérales intérieures (12), et
une profondeur de rainure (Da) au niveau de l'extrémité de bande de roulement extérieure (To) de chacune de la pluralité de rainures latérales extérieures (11) est inférieure à une profondeur de rainure (Db) au niveau de l'extrémité de bande de roulement intérieure (Ti) de chacune de la pluralité de rainures latérales intérieures (12).

2. Pneumatique (1) selon la revendication 1, dans lequel la profondeur de rainure (Da) au niveau de l'extrémité de bande de roulement extérieure (To) de chacune de la pluralité de rainures latérales extérieures (11) n'est pas inférieure à 0,8 fois la profondeur de rainure (Db) au niveau de l'extrémité de bande de roulement intérieure (Ti) de chacune de la pluralité de rainures latérales intérieures (12).

3. Pneumatique (1) selon la revendication 1 ou 2, dans lequel la longueur de pas (P1) dans la direction circonférentielle du pneumatique de la pluralité de rainures latérales extérieures (11) est de 1,1 à 2,0 fois la longueur de pas (P2) dans la direction circonférentielle du pneumatique de la pluralité de rainures latérales intérieures (12).

4. Pneumatique (1) selon l'une quelconque des revendications 1 à 3, dans lequel la dureté de caoutchouc (Ra) de la surface de contact au sol (2s) de la région extérieure (2A) est de 0,70 à 0,95 fois la dureté de caoutchouc (Rb) de la surface de contact au sol (2i) de la région intérieure (2B).

5. Pneumatique (1) selon l'une quelconque des revendications 1 à 4, dans lequel
la portion formant bande de roulement (2) a une seconde rainure circonférentielle (4) située au niveau du côté de l'extrémité de bande de roulement intérieure (Ti) par rapport à la première rainure circonférentielle (3), et
une profondeur de rainure (D2) de la seconde rainure circonférentielle (4) est supérieure à une profondeur de rainure (D1) de la première rainure circonférentielle (3).

6. Pneumatique (1) selon la revendication 5, dans lequel la profondeur de rainure (D1) de la première rainure circonférentielle (3) est supérieure à 0,5 fois la profondeur de rainure (D2) de la seconde rainure circonférentielle (4).

7. Pneumatique (1) selon l'une quelconque des revendications 1 à 6, dans lequel une aire (A1) de la région extérieure (2A) est de 0,25 à 0,5 fois la somme de l'aire (A1) de la région extérieure (2A) et d'une aire (A2) de la région intérieure (2B).

8. Pneumatique (1) selon l'une quelconque des revendications 1 à 7, dans lequel chacune de la pluralité de rainures latérales extérieures (11) est connectée à la première rainure circonférentielle (3).

9. Pneumatique (1) selon la revendication 5 ou 6, dans lequel chacune de la pluralité de rainures latérales intérieures (12) est connectée à la seconde rainure circonférentielle (4).
